# EUROPEAN PATENT APPLICATION

(11) **EP 3 726 291 A1**
(43) Date of publication of application: **21.10.2020**
(21) Application number: 18888983.6
(22) Date of filing: 13.08.2018
(51) Int. Cl.: G03B 21/14, G02B 5/30

(54) **PROJECTOR AND OPTICAL MEMBER USED IN PROJECTOR**

(30) Priority: 14.12.2017 JP 2017239820
(71) Applicant: Nitto Denko Corporation, Ibaraki-shi, Osaka 567-8680 (JP)
(72) Inventor: YAEGASHI Masahiro, Ibaraki-shi, Osaka 567-8680 (JP); UMEMOTO Seiji, Ibaraki-shi, Osaka 567-8680 (JP)
(74) Representative: Hoffmann Eitle
(86) International application number: PCT/JP2018/030210
(87) International publication number: WO 2019/116634

(57) **Abstract**

There is provided a projector reduced in light quantity loss due to passage through a polarizing element and capable of achieving a projected image retaining a desired hue. A projector of the present invention includes: a color separation optical system configured to separate light from a light source into red light, green light, and blue light; light modulation apparatus configured to modulate each of the red light, the green light, and the blue light in accordance with image information to generate image light; a color composition optical system configured to composite the image light of the modulated red light, the image light of the modulated green light, and the image light of the modulated blue light; a projection optical system configured to project the composited image light; and a retardation element and a polarizing element, which are arranged between the color composition optical system and the projection optical system in the stated order from a color composition optical system side. The retardation element is configured to align a polarization direction of the composited image light to a direction substantially parallel to a transmission axis direction of the polarizing element.

## Description

### Technical Field

The present invention relates to a projector and an optical member to be used for the projector.

### Background Art

There is known a so-called three-chip projector, which is configured to: separate light from a light source into light of three colors, i.e., red (R), green (G), and blue (B); cause the light of three colors to pass through respective light modulation apparatus (e.g., liquid crystal display apparatus) to generate image light in accordance with image information; recomposite the resultant image light of three colors with a color composition optical system; and project the resultant onto a screen. According to the conventional three-chip projector, of the R light, the G light, and the B light in the image light, the R light and the B light are each s-polarized light, and the G light is p-polarized light.

Incidentally, an image projected by the projector is generally dark as compared to an image displayed by an image display apparatus, and hence is liable to be affected by ambient light. Therefore, an adjustment to a projection environment, such as darkening of a room, is required. As a matter of course, there is a demand for a projector capable of clearly displaying a projected image even under a bright environment. From such viewpoint, investigations have been made on a system in which a selective reflection layer is arranged on a screen to enable the projected image to be clearly displayed even under a bright environment through polarization (linear polarization or circular polarization) (for example, Patent Literatures 1 and 2). However, when emitted light (composited image light) is to be polarized in the three-chip projector, the following problems arise. That is, the general three-chip projector has problems in that: the R light and the B light, or the G light is absorbed, and hence the projected image becomes dark and cannot retain a hue; and when a retardation plate having an extremely large in-plane retardation is arranged on a projection side of the color composition optical system to significantly disturb a polarization state of each color so as to achieve a pseudo-unpolarized state (for example, Patent Literatures 3 and 4), about a half of pseudo-depolarized light is absorbed, and hence the projected image becomes dark.

### Citation List

### Patent Literature

[PTL 1] JP 2005-107017 A
[PTL 2] JP 2017-015897 A
[PTL 3] JP 2017-044766 A
[PTL 4] JP 2005-321544 A

### Summary of Invention

### Technical Problem

The present invention has been made in order to solve the conventional problems as described above, and an object of the present invention is to provide a projector reduced in light quantity loss due to passage through a polarizing element and capable of achieving a projected image retaining a desired hue, and an optical member that can be used for such projector.

### Solution to Problem

A projector according to an embodiment of the present invention includes: a color separation optical system configured to separate light from a light source into red light, green light, and blue light; light modulation apparatus configured to modulate each of the red light, the green light, and the blue light in accordance with image information to generate image light; a color composition optical system configured to composite the image light of the modulated red light, the image light of the modulated green light, and the image light of the modulated blue light; a projection optical system configured to project the composited image light; and a retardation element and a polarizing element, which are arranged between the color composition optical system and the projection optical system in the stated order from a color composition optical system side. The retardation element is configured to align a polarization direction of the composited image light to a direction substantially parallel to a transmission axis direction of the polarizing element.

In one embodiment of the present invention, the retardation element is arranged so that a slow axis thereof forms an angle of from 40° to 50° with respect to a polarization direction of the image light of the blue light.

In one embodiment of the present invention, the retardation element has an in-plane retardation Re(550) of from 1,250 nm to 1,400 nm or from 1,520 nm to 1,670 nm.

In one embodiment of the present invention, the polarizing element is arranged so that a transmission axis thereof forms an angle of from 40° to 50° with respect to a slow axis of the retardation element.

In one embodiment of the present invention, the retardation element and the polarizing element are configured to be an integral member.

In one embodiment of the present invention, Stokes parameters S1 and S3 of each of the red light, the green light, and the blue light after passage through the retardation element satisfy relationships of S1≤-0.85 or 0.85≤S1, and -0.3<S3<0.2.

According to another aspect of the present invention, there is provided an optical member. The optical member includes: a polarizing element; and a retardation element. The optical member is arranged between a color composition optical system and a projection optical system of a projector so that the retardation element is on a color composition optical system side. The retardation element has a function of aligning a polarization direction of image light composited by the color composition optical system to a direction substantially parallel to a transmission axis direction of the polarizing element.

In one embodiment of the present invention, an angle formed by a transmission axis of the polarizing element and a slow axis of the retardation element is from 40° to 50°.

### Advantageous Effects of Invention

According to the embodiment of the present invention, in the three-chip projector, the retardation element is arranged between the color composition optical system and the projection optical system, and the in-plane retardation and slow axis direction of the retardation element, the angle between the slow axis thereof and the transmission axis of the polarizing element, and the like are optimized, and thus the polarization direction of the composited image light can be aligned to a direction substantially parallel to the transmission axis direction of the polarizing element. As a result, the light quantity loss due to passage through the polarizing element is reduced, with the result that a projector in which the polarizing element is arranged on the projection side of the color composition optical system (i.e., a projector configured to achieve a projected image through the use of linearly polarized light) can be obtained. Further, such projector can achieve a projected image retaining a desired hue. Therefore, according to the embodiment of the present invention, a projector capable of clearly displaying a projected image under a bright environment can be achieved. Further, according to the embodiment of the present invention, an optical member capable of achieving such projector can be provided.

### Brief Description of Drawings

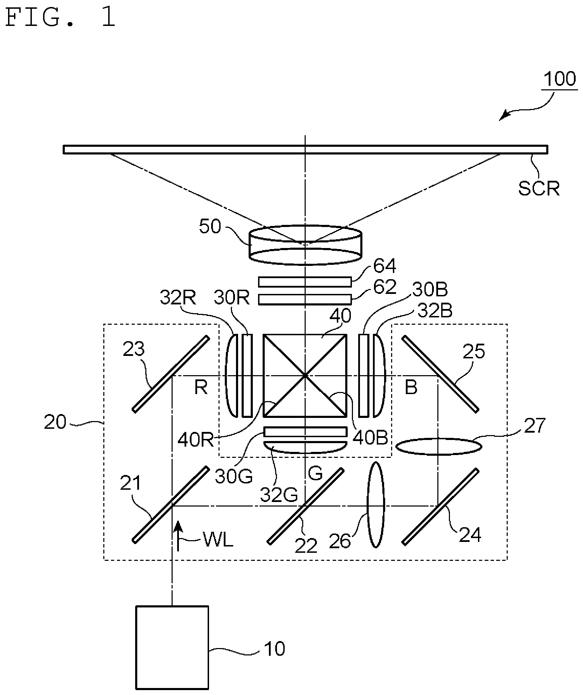

FIG. **1** is a schematic configuration view for illustrating a projector according to one embodiment of the present invention.

### Description of Embodiments

Embodiments of the present invention are described below. However, the present invention is not limited to these embodiments.

FIG. **1** is a schematic configuration view for illustrating a projector according to one embodiment of the present invention. A projector **100** of the illustrated example includes: a light source **10;** a color separation optical system **20** configured to separate light from the light source **10** into red light R, green light G, and blue light B; light modulation apparatus **30R, 30G,** and **30B** configured to modulate each of the red light R, the green light G, and the blue light B in accordance with image information to generate image light; a color composition optical system **40** configured to composite the image light of the modulated red light R, the image light of the modulated green light G, and the image light of the modulated blue light B; a projection optical system **50** configured to project the composited image light; and a retardation element **62** and a polarizing element **64,** which are arranged between the color composition optical system **40** and the projection optical system **50** in the stated order from a color composition optical system **40** side. In the embodiment of the present invention, the retardation element **62** is configured to align the polarization direction of the composited image light to a direction substantially parallel to the transmission axis direction of the polarizing element **64.**

The light source **10** is typically configured to emit white light **WL.** Any appropriate configuration may be adopted for the light source **10**.

The color separation optical system **20** typically includes a dichroic mirror **21,** a dichroic mirror **22,** a reflective mirror **23,** a reflective mirror **24,** a reflective mirror **25,** a relay lens 26, and a relay lens 27. The color separation optical system 20 is configured to separate light from the light source **10** into the red light R, the green light G, and the blue light B, and to guide the light of each color, i.e., the red light R, the green light G, and the blue light B to their respective illumination objects, i.e., the light modulation apparatus **30R,** the light modulation apparatus **30G,** and the light modulation apparatus **30B**. A condenser lens **32R,** a condenser lens **32G,** and a condenser lens **32B** are arranged between the color separation optical system **20** and the light modulation apparatus **30R,** between the color separation optical system **20** and the light modulation apparatus **30G,** and between the color separation optical system **20** and the light modulation apparatus **30B**, respectively.

The dichroic mirror **21** is configured to transmit the red light R, and to reflect the green light G and the blue light B. The dichroic mirror **22** is configured to reflect the green light G out of the green light G and the blue light B that have been reflected by the dichroic mirror **21,** and to transmit the blue light B.

The reflective mirror **23** is configured to reflect the red light R transmitted through the dichroic mirror **21.** The reflective mirror **24** and the reflective mirror **25** are configured to reflect the blue light B transmitted through the dichroic mirror **22.**

The red light R transmitted through the dichroic mirror **21** is reflected by the reflective mirror **23,** and is transmitted through the condenser lens **32R** to be entered into the image formation region of the light modulation apparatus **30R** for red light. The green light G reflected by the dichroic mirror **21** is further reflected by the dichroic mirror **22,** and is transmitted through the condenser lens **32G** to be entered into the image formation region of the light modulation apparatus **30G** for green light. The blue light B transmitted through the dichroic mirror **22** is entered into the image formation region of the light modulation apparatus **30B** for blue light via the relay lens **26,** the reflective mirror **24,** the relay lens **27,** the reflective mirror **25,** and the condenser lens **32B.**

The light modulation apparatus **30R,** the light modulation apparatus **30G,** and the light modulation apparatus **30B** are configured to modulate the entered red light R, green light G, and blue light B in accordance with image information, to form image light corresponding to the red light R, image light corresponding to the green light G, and image light corresponding to the blue light B, respectively. The light modulation apparatus **30R,** the light modulation apparatus **30G,** and the light modulation apparatus **30B** are the illumination objects of the light source **10**.

The light modulation apparatus **30R,** the light modulation apparatus **30G,** and the light modulation apparatus **30B** may each typically be a liquid crystal display apparatus, and may each be more specifically a transmissive liquid crystal display apparatus. The liquid crystal display apparatus typically includes: a pair of substrates; a liquid crystal layer arranged between the pair of substrates and containing a liquid crystal serving as a display medium; and a pair of polarizing plates arranged on the outsides (i.e., enter side and emit side) of the pair of substrates (none of which is shown). Any appropriate configuration may be adopted for the liquid crystal display apparatus. For example, the liquid crystal display apparatus maybe of a normally black mode or a normally white mode, and its driving mode may be a VA mode or an IPS mode. When the light modulation apparatus **30R,** the light modulation apparatus **30G,** and the light modulation apparatus **30B** are each a transmissive liquid crystal display apparatus, the light to be emitted (transmitted) (i.e., the image light corresponding to the red light R, the image light corresponding to the green light G, and the image light corresponding to the blue light B) is polarized light (typically, linearly polarized light).

The color composition optical system 40 may be typically formed of a cross dichroic prism. The cross dichroic prism is an optical element configured to composite the image light corresponding to the red light R, the image light corresponding to the green light G, and the image light corresponding to the blue light B. The cross dichroic prism may be typically produced by combining (e.g., bonding) four triangular prisms. With this, in the cross dichroic prism **40,** an R light-reflecting dichroic film **40R** and a B light-reflecting dichroic film **40B** are perpendicularly arranged. Of the image light corresponding to the red light R, the image light corresponding to the green light G, and the image light corresponding to the blue light B that have been respectively entered from different entering surfaces, the image light corresponding to the red light R is reflected by the R light-reflecting dichroic film **40R** into the direction of the projection optical system **50,** the image light corresponding to the blue light B is reflected by the B light-reflecting dichroic film **40B** into the direction of the projection optical system **50,** and the image light corresponding to the green light G is transmitted through the two dichroic films. Thus, composited image light is generated.

The image light composited by the cross dichroic prism **40** is enlarged and projected by the projection optical system **50** to form an image on a screen **SCR.** The projection optical system **50** includes a plurality of lenses.

In the embodiment of the present invention, as described above, the retardation element **62** and the polarizing element **64** are arranged between the color composition optical system **40** and the projection optical system **50** in the stated order from a color composition optical system **40.** The retardation element **62** and the polarizing element **64** may be members separate from each other, or may be configured to be an integral member. When the retardation element **62** and the polarizing element **64** are configured to be an integral member, an optical member including a retardation element and a polarizing element (e. g., a polarizing plate with a retardation layer) may be used. The combination of the retardation element and the polarizing element is one of the features of the embodiment of the present invention, and hence the embodiment of the present invention also encompasses an optical member including a retardation element and a polarizing element.

In the embodiment of the present invention, the polarization direction of the composited image light is aligned by the retardation element **62** to a direction substantially parallel to the transmission axis direction of the polarizing element **64.** As used herein, the expressions "substantially parallel" and "approximately parallel" each encompass a case in which an angle formed by two directions is 0°±7°, and the angle is preferably 0°±5°, more preferably 0°±3°. The expressions "substantially perpendicular" and "approximately perpendicular" each encompass a case in which an angle formed by two directions is 90°±7°, and the angle is preferably 90°±5°, more preferably 90°±3°. Further, the simple expression "parallel" or "perpendicular" as used herein may include a substantially parallel or substantially perpendicular state. When an angle is mentioned herein, the angle encompasses both clockwise and counterclockwise angles with respect to a reference direction.

More specifically, with regard to the polarization direction of the composited image light, the polarization direction of each of the image light corresponding to the red light R, the image light corresponding to the green light G, and the image light corresponding to the blue light B is aligned to a direction substantially parallel to the transmission axis direction of the polarizing element. In other words, the image light corresponding to the red light R, the image light corresponding to the green light G, and the image light corresponding to the blue light B are each linearly polarized light or elliptically polarized light that is elongate (i.e. , close to linearly polarized light), and the vibration direction of the linearly polarized light and the major axis direction of the elliptically polarized light are aligned to a direction substantially parallel to the transmission axis direction of the polarizing element. Typically, the image light corresponding to the red light R and the image light corresponding to the blue light B become s-polarized light, and the image light corresponding to the green light G becomes p-polarized light. Meanwhile, according to the embodiment of the present invention, the in-plane retardation and slow axis direction of the retardation element **62,** an angle between the slow axis thereof and the transmission axis of the polarizing element, and the like are optimized, and thus the vibration directions of the s-polarized light and the p-polarized light are appropriately converted. Accordingly, the directions can be aligned as described above. As a result, a light quantity loss due to passage through the polarizing element is reduced, with the result that a projector in which the polarizing element is arranged on the projection side of the color composition optical system (i.e., a projector configured to achieve a projected image through the use of linearly polarized light) can be obtained. Further, such projector can achieve a projected image retaining a desired hue. Therefore, according to the embodiment of the present invention, a projector capable of clearly displaying a projected image under a bright environment can be achieved.

As described above, the polarization direction of the composited image light is aligned by the retardation element **62** to a direction substantially parallel to the transmission axis direction of the polarizing element **64.** This is specifically as described below. The Stokes parameter S1 of each of the red light (image light corresponding to the red light R), the green light (image light corresponding to the green light G), and the blue light (image light corresponding to the blue light R) after passage through the retardation element typically satisfies a relationship of S1≤-0.85 or 0.85≤S1. S1 satisfies a relationship of preferably S1≤-0.90 or 0.90≤S1, more preferably S1≤-0.95 or 0.95≤S1. Further, the Stokes parameter S3 of each of the red light (image light corresponding to the red light R), the green light (image light corresponding to the green light G), and the blue light (image light corresponding to the blue light B) after passage through the retardation element typically satisfies a relationship of -0.3<S3<0.2. S3 satisfies a relationship of preferably -0.25<S3<0.15, more preferably -0.2<S3<0.1. The Stokes parameter S1 represents a linearly polarized light component, and the Stokes parameter S3 represents a circularly polarized light component. As S1 or S3 gets closer to ±1, the light component gets closer to perfect linearly polarized light or circularly polarized light. Thus, according to the embodiment of the present invention, the red light, the green light, and the blue light after passage through the retardation element each contain extremely large quantities of a linearly polarized light component and an elliptically polarized light component close to linearly polarized light, and each contain an extremely small quantity of a circularly polarized light component. Therefore, by causing the vibration directions of such linearly polarized light and elliptically polarized light close to linearly polarized light to be substantially parallel to the transmission axis direction of the polarizing element to be described later, extremely large quantity of light can be transmitted through the polarizing element, and the light quantity loss can be minimized. As a result, a projector in which the polarizing element is arranged on the projection side of the color composition optical system (i.e., a projector configured to achieve a projected image through the use of linearly polarized light) can be obtained, and moreover, such projector can achieve a projected image retaining a desired hue. Therefore, a projector capable of clearly displaying a projected image under a bright environment can be achieved.

Any appropriate configuration may be adopted for the retardation element 62 as long as the retardation element 62 has a function by which the polarization direction of the composited image light can be aligned to a direction substantially parallel to the transmission axis direction of the polarizing element. The in-plane retardation Re(550) of the retardation element is preferably from 1,250 nm to 1,400 nm, more preferably from 1,300 nm to 1,370 nm. Alternatively, the in-plane retardation Re(550) of the retardation element is preferably from 1,520 nm to 1,670 nm, more preferably from 1,570 nm to 1,620 nm. It is appropriate that the retardation element have a refractive index characteristic of satisfying nx>ny and obtain the desired in-plane retardation. As used herein, the term "in-plane retardation Re(λ)" refers to an in-plane retardation measured at 23°C with light having a wavelength of λ nm. Re (λ) is determined by the equation: Re= (nx-ny) ×d, where "d" (nm) represents the thickness of a layer (film). For example, Re(550) is an in-plane retardation measured at 23°C with light having a wavelength of 550 nm.

The retardation element may show such a reverse wavelength dispersion characteristic that its retardation value increases with an increase in wavelength of measurement light, may show such a positive wavelength dispersion characteristic that the retardation value reduces with an increase in wavelength of the measurement light, or may show such a flat wavelength dispersion characteristic that the retardation value remains substantially unchanged even when the wavelength of the measurement light is changed. When the retardation element shows the reverse wavelength dispersion characteristic, a ratio Re (450) /Re (550) is preferably 0.85 or more and less than 1.00, more preferably 0.95 or more and less than 1.00; and a ratio Re(550)/Re(650) is preferably 0.90 or more and less than 1.00, more preferably 0.95 or more and less than 1.00. When the retardation element shows the positive wavelength dispersion characteristic or the flat wavelength dispersion characteristic, the ratio Re(450)/Re(550) is preferably from 1.00 to 1.15, more preferably from 1.00 to 1.07; and the ratio Re(550)/Re(650) is preferably from 1.00 to 1.10, more preferably from 1.00 to 1.05.

The thickness of the retardation element may be set so that the desired in-plane retardation is be obtained depending on its material and the like. The thickness of the retardation element is preferably from 20 µm to 500 µm, more preferably from 50 µm to 400 µm, still more preferably from 100 µm to 350 µm.

The retardation element may be formed of a retardation film formed of any appropriate resin capable of achieving the above-mentioned characteristics. Examples of the resin for forming the retardation film include polyarylate, polyamide, polyimide, polyester, polyaryl ether ketone, polyamide imide, polyester imide, polyvinyl alcohol, polyfumaric acid ester, polyethersulfone, polysulfone, a norbornene resin, a polycarbonate resin, a cellulose resin, and polyurethane. Those resins may be used alone or in combination thereof.

The retardation element satisfies nx>ny and has an in-plane retardation as described above, and hence has a slow axis. The retardation element is arranged in the projector so that the slow axis direction thereof becomes such a direction that the polarization direction of the composited image light can be aligned to a direction substantially parallel to the transmission axis direction of the polarizing element. For example, the retardation element may be arranged so that the slow axis thereof forms an angle of preferably from 40° to 50°, more preferably from 42° to 48°, still more preferably from 43° to 47°, particularly preferably about 45° with respect to the polarization direction (vibration direction) of the blue light (image light corresponding to the blue light B) . With such configuration, the slow axis of the retardation element can have a similar angle also with respect to the polarization direction (vibration direction) of the red light (image light corresponding to the red light R), and can have an angle of preferably from 130° to 140°, more preferably from 132° to 138°, still more preferably from 133° to 137°, particularly preferably about 135° with respect to the polarization direction (vibration direction) of the green light (image light corresponding to the green light G) .

The polarizing element 64 may be formed of a polarizing plate. The polarizing plate includes a polarizer and a protective film arranged on one side, or each of both sides, of the polarizer. Any appropriate configuration may be adopted for each of the polarizer and the protective film. The polarizing element may be arranged so that the transmission axis thereof (substantially the transmission axis of the polarizer included in the polarizing element) is in a direction substantially parallel to the polarization direction of the composited image light. For example, when the in-plane retardation Re(550) of the retardation element is from 1,250 nm to 1,400 nm, the polarizing element may be arranged so that the transmission axis thereof forms an angle of preferably from -5° to 5°, more preferably from -3° to 3°, still more preferably from -2° to 2°, particularly preferably about 0° with respect to the polarization direction (vibration direction) of the blue light (image light corresponding to the blue light B). In addition, for example, when the in-plane retardation Re(550) of the retardation element is from 1,520 nm to 1,670 nm, the polarizing element may be arranged so that the transmission axis thereof forms an angle of preferably from 85° to 95°, more preferably from 87° to 93°, still more preferably from 88° to 92°, particularly preferably about 90° with respect to the slow axis of the retardation element. In any case, the angle formed by the transmission axis of the polarizing element and the slow axis of the retardation element is preferably from 40° to 50°, more preferably from 42° to 48°, still more preferably from 43° to 47°, particularly preferably about 45°.

An example in which the present invention is applied to a projector including the transmissive liquid crystal display apparatus as the light modulation apparatus has been described above . However, the present invention may also be applied to a projector including reflective liquid crystal display apparatus. Further, the light modulation apparatus are not limited to the liquid crystal display apparatus, and may each be, for example, a light modulation apparatus using a micromirror. In addition, in the above-mentioned embodiment, an example of a projector using three liquid crystal display apparatus has been described, but the number of liquid crystal display apparatus may be appropriately changed depending on purposes. Therefore, the present invention may also be applied to, for example, a projector using four or more liquid crystal display apparatus. In addition, the shape, dimensions, number, arrangement, material, and the like of each constituent element of the projector may be appropriately changed depending on purposes and the like.

### Examples

The present invention is specifically described below by way of Examples, but the present invention is not limited to Examples. Evaluation items in Examples are as described below.

### <Example 1>

### 1. Production of Retardation Element

A polycarbonate-based resin film was stretched to provide a retardation film having a thickness of 220 µm. The retardation film had an Re(550) of 1,310 nm, a ratio Re(450)/Re(550) of 1.02, and a ratio Re (550) /Re (650) of 1.01. The retardation film was used as a retardation element.

### 2. Production of Projector

A projector having the configuration illustrated in FIG. 1 was produced using a LED lamp configured to emit white light (manufactured by REVOX Inc., product name: "SLG-50S") as a light source, and using a commercially available polarizing plate (manufactured by Sigmakoki Co., Ltd., product name: "USP-50C0.4-38") as a polarizing element. In this case, the retardation element was arranged so that the slow axis thereof formed an angle of 45° with respect to the polarization direction (vibration direction) of blue light (image light corresponding to blue light B). The polarizing element was arranged so that the transmission axis thereof formed an angle of 0° with respect to the polarization direction (vibration direction) of blue light (image light corresponding to blue light B) (the angle formed by the transmission axis of the polarizer and the slow axis of the retardation element was 45°).

### 3. Evaluation

### (1) Stokes Parameters

The Stokes parameters S1 and S3 of each of red light (image light corresponding to red light R), green light (image light corresponding to green light G), and blue light (image light corresponding to blue light R) after passage through the retardation element were measured with a spectroscopic polarimeter (manufactured by Tokyo Instruments, Inc., product name: "Poxi-spectra"). The obtained results are shown in Table 1.

### (2) Brightness and Hue

In order to project light from the obtained projector, white printing paper was placed at a site about 2 m away in the front direction of the projector to serve as a screen. Further, a spectroradiometer ("SR-UL1" manufactured by Topcon Technohouse Corporation, measurement angle: 2°) was placed at a site about 2 m away in a direction at a polar angle of 10° of the projection surface of the screen (i.e., direction forming an angle of 10° with respect to a normal direction of the projection surface) . A white image was projected from the projector onto the screen, and the brightness and hue (x-value and y-value) of the screen in this case were measured with the spectroradiometer. Further, the hue was visually evaluated by the following criteria. The results are shown in Table 1.
- ○:: White
- Δ:: Slightly colored
- ×:: Markedly colored
Under a state in which the retardation element and the polarizing element were not placed, the brightness was 300 cd/m², and the x-value and the y-value were 0.3068 and 0.3957, respectively.

### <Example 2>

A norbornene-based resin film was stretched to provide a retardation film having a thickness of 250 µm. The retardation film had an Re(550) of 1,370 nm, a ratio Re(450)/Re(550) of 1.01, and a ratio Re(550)/Re(650) of 1.00. A projector was produced in the same manner as in Example 1 except that this retardation film was used as the retardation element. In this projector, the Stokes parameters S1 and S3 of each of red light, green light, and blue light after passage through the retardation element were determined in the same manner as in Example 1, and a brightness and a hue were determined in the same manner as in Example 1. The results are shown in Table 1.

### <Example 3>

A cellulose-based resin film was stretched to provide a retardation film having a thickness of 220 µm. The retardation film had an Re(550) of 1,300 nm, a ratio Re(450)/Re(550) of 1.08, and a ratio Re(550)/Re(650) of 1.02. A projector was produced in the same manner as in Example 1 except that this retardation film was used as the retardation element. In this projector, the Stokes parameters S1 and S3 of each of red light, green light, and blue light after passage through the retardation element were determined in the same manner as in Example 1, and a brightness and a hue were determined in the same manner as in Example 1. The results are shown in Table 1.

### <Example 4>

A polyarylate-based resin film was stretched to provide a retardation film having a thickness of 240 µm. The retardation film had an Re(550) of 1,350 nm, a ratio Re(450)/Re(550) of 0.98, and a ratio Re(550)/Re(650) of 0.99. A projector was produced in the same manner as in Example 1 except that this retardation film was used as the retardation element. In this projector, the Stokes parameters S1 and S3 of each of red light, green light, and blue light after passage through the retardation element were determined in the same manner as in Example 1, and a brightness and a hue were determined in the same manner as in Example 1. The results are shown in Table 1.

### <Example 5>

A polycarbonate-based resin film was stretched to provide a retardation film having a thickness of 300 µm. The retardation film had an Re(550) of 1,610 nm, a ratio Re(450)/Re(550) of 1.02, and a ratio Re(550)/Re(650) of 1.01. A projector was produced in the same manner as in Example 1 except that this retardation film was used as the retardation element and that the transmission axis of the polarizing element was at 90° with respect to the polarization direction (vibration direction) of blue light (image light corresponding to blue light B). In this projector, the Stokes parameters S1 and S3 of each of red light, green light, and blue light after passage through the retardation element were determined in the same manner as in Example 1, and a brightness and a hue were determined in the same manner as in Example 1. The results are shown in Table 1.

### <Comparative Example 1>

A projector was produced in the same manner as in Example 1 except that the retardation element was not arranged, and the polarizing element was arranged immediately after the color composition optical system so that the transmission axis thereof was at 0° with respect to the polarization direction (vibration direction) of blue light (image light corresponding to blue light B). In this projector, the Stokes parameters S1 and S3 of each of red light, green light, and blue light immediately before the polarizing element were determined in the same manner as in Example 1, and a brightness and a hue were determined in the same manner as in Example 1. The results are shown in Table 1.

### <Comparative Example 2>

A polyester-based resin film was stretched to provide a retardation film having a thickness of 200 µm. The retardation film had an Re(550) of 8,000 nm, a ratio Re(450)/Re(550) of 1.07, and a ratio Re(550)/Re(650) of 1.03. A projector was produced in the same manner as in Example 1 except that this retardation film was used as the retardation element. In this projector, the Stokes parameters S1 and S3 of each of red light, green light, and blue light after passage through the retardation element were determined in the same manner as in Example 1, and a brightness and a hue were determined in the same manner as in Example 1. The results are shown in Table 1.

### <Comparative Example 3>

A polycarbonate-based resin film was stretched to provide a retardation film having a thickness of 200 µm. The retardation film had an Re(550) of 1,200 nm, a ratio Re(450)/Re(550) of 1.02, and a ratio Re(550)/Re(650) of 1.01. A projector was produced in the same manner as in Example 1 except that this retardation film was used as the retardation element. In this projector, the Stokes parameters S1 and S3 of each of red light, green light, and blue light after passage through the retardation element were determined in the same manner as in Example 1, and a brightness and a hue were determined in the same manner as in Example 1. The results are shown in Table 1.

**Table 1**

| | Re (550) | Re(450)/ Re(550) | Re(550)/ Re(650) | S1 | | | S3 | | | Brightness (cd/m²) | Hue | | |
|---|---|---|---|---|---|---|---|---|---|---|---|---|---|
| | | | | B | G | R | B | G | R | | x | y | Evaluation |
| Example 1 | 1,310 | 1.02 | 1.01 | 0.98 | 0.99 | 1.00 | -0.18 | -0.14 | 0.02 | 218.9 | 0.2845 | 0.3791 | ○ |
| Example 2 | 1,370 | 1. 01 | 1.00 | 1.00 | 1.00 | 1.00 | 0.01 | -0.06 | 0.05 | 210.4 | 0.2840 | 0.3964 | ○ |
| Example 3 | 1,300 | 1.08 | 1. 02 | 1.00 | 0.99 | 1.00 | 0.06 | -0.16 | -0.09 | 206.4 | 0.2959 | 0.3983 | ○ |
| Example 4 | 1,350 | 0.98 | 0.99 | 0.99 | 1.00 | 0.98 | -0.14 | -0.02 | 0.20 | 217.9 | 0.2806 | 0.3949 | ○ |
| Example 5 | 1,610 | 1. 02 | 1. 01 | -0.99 | -1.00 | -1.00 | 0.17 | 0.10 | 0.00 | 205.7 | 0.3401 | 0.4174 | ○ |
| Comparativ e Example 1 | - | - | - | 1.00 | -1.00 | 1.00 | 0.00 | 0.00 | 0.00 | 108.8 | 0.3143 | 0.1330 | × |
| Comparativ e Example 2 | 8,000 | 1. 07 | 1. 03 | 0.62 | 0.96 | 0.13 | 0.79 | 0.28 | 0.99 | 127.6 | 0.2746 | 0.3460 | Δ |
| Comparativ e Example 3 | 1,200 | 1. 02 | 1. 01 | -0.18 | -0.42 | 0.51 | -0.98 | -0.91 | -0.86 | 130.7 | 0.3303 | 0.3795 | Δ |

As is apparent from Table 1, according to each of Examples of the present invention, red light, green light, and blue light after passage through the retardation element are each in a state of being extremely close to linearly polarized light, and besides, their vibration directions are aligned to the same direction. As a result, in each Examples of the present invention, the brightness is much higher than in each of Comparative Examples, and besides, a desired hue is retained in the projected image.

### Industrial Applicability

The projector according to the embodiment of the present invention is expected to expand applications as a projector capable of clearly displaying a projected image even under a bright environment.

### Reference Signs List

- **10**: light source
- **20**: color separation optical system
- **30R, 30G, 30B**: light modulation apparatus
- **40**: color composition optical system
- **50**: color composition optical system
- **62**: retardation element
- **64**: polarizing element
- **100**: projector

## Claims

1. A projector, comprising:
a color separation optical system configured to separate light from a light source into red light, green light, and blue light;
light modulation apparatus configured to modulate each of the red light, the green light, and the blue light in accordance with image information to generate image light;
a color composition optical system configured to composite the image light of the modulated red light, the image light of the modulated green light, and the image light of the modulated blue light;
a projection optical system configured to project the composited image light; and
a retardation element and a polarizing element, which are arranged between the color composition optical system and the projection optical system in the stated order from a color composition optical system side,
wherein the retardation element is configured to align a polarization direction of the composited image light to a direction substantially parallel to a transmission axis direction of the polarizing element.

2. The projector according to claim 1, wherein the retardation element is arranged so that a slow axis thereof forms an angle of from 40° to 50° with respect to a polarization direction of the image light of the blue light.

3. The projector according to claim 1 or 2, wherein the retardation element has an in-plane retardation Re(550) of from 1,250 nm to 1,400 nm or from 1,520 nm to 1,670 nm.

4. The projector according to claim 3, wherein the polarizing element is arranged so that a transmission axis thereof forms an angle of from 40° to 50° with respect to a slow axis of the retardation element.

5. The projector according to any one of claims 1 to 4, wherein the retardation element and the polarizing element are configured to be an integral member.

6. The projector according to anyone of claims 1 to 5, wherein Stokes parameters S1 and S3 of each of the red light, the green light, and the blue light after passage through the retardation element satisfy relationships of S1≤-0.85 or 0.85≤S1, and -0.3<S3<0.2.

7. An optical member, comprising:
a polarizing element; and
a retardation element,
the optical member being arranged between a color composition optical system and a projection optical system of a projector so that the retardation element is on a color composition optical system side,
wherein the retardation element has a function of aligning a polarization direction of image light composited by the color composition optical system to a direction substantially parallel to a transmission axis direction of the polarizing element.

8. The optical member according to claim 7, wherein an angle formed by a transmission axis of the polarizing element and a slow axis of the retardation element is from 40° to 50°.
